## Europäisches Patentamt
## European Patent Office
## Office européen des brevets

(19)

(11) Veröffentlichungsnummer: **0 092 016**
**A1**

(12) # EUROPÄISCHE PATENTANMELDUNG

(21) Anmeldenummer: **82830098.8**

(22) Anmeldetag: **19.04.82**

(51) Int. Cl.³: **G 01 N 21/88,** G 01 N 21/23

(43) Veröffentlichungstag der Anmeldung: **26.10.83**
**Patentblatt 83/43**

(84) Benannte Vertragsstaaten: **AT CH DE FR GB IT LI**

(71) Anmelder: **Valdottica S.p.A., Via Erizzo-Zona Industriale, I-31049 Valdobbiadene (Treviso) (IT)**

(72) Erfinder: **Anselmi, Rino, Via Erizzo - Zona Industriale, I-31049 Valdobbiadene (TV) (IT)**

(74) Vertreter: **Sneider, Massimo, Lenzi & C. Via del Tritone 201, I-00187 Roma (IT)**

(54) **Gerät zur Qualitätskontrolle von Azetylzellulose-Materialien u.dgl.**

(57) Die vorliegende Erfindung bezieht sich auf ein Gerät zur Qualitätskontrolle von Azetylzellulose-Materialien u.dgl., dessen Betrieb darauf beruht, daß eine polarisierte Platte es gestattet, die von einer geeigneten Lichtquelle herrührenden Strahlen in eine bestimmte Richtung zu lenken, indem es möglich ist, wenn diesen Strahlen ein Gegenstand aus Azetylzellulose-Material u.dgl. dazwischengelegt wird, die etwaigen Fehler, wie Luftblasen, Fremdkörper usw., hervorzuheben, wobei das Gerät aus einem Behälter (1) besteht, in dem eine oder mehrere Lichtquellen (2) angeordnet sind, und am oberen Teil dieses Behälters eine zwischen zwei Glasplatten (4 und 5) eingeschlossene polarisierte Platte (3) vorhanden ist. Am Behälter (1) befindet sich fest verbunden eine zusammenschiebbare Stange (6), welche eine weitere zwischen zwei Glasplatten (8 und 9) eingeschlossene polarisierte Platte (7) abstützt und es gestattet, den Höhenabstand zwischen der Platte (3) und der Platte (7) zu ändern. Im Inneren des Behälters (1) befindet sich weiters ein Ventilator (10), welcher in der Lage ist die Innentemperatur auf gleichmäßiger optimaler Höhe zu halten.

"Gerät zur Qualitätskontrolle von Azetylzellulose-
Materialien u.dgl."

Beschreibung :

Es ist bekannt , dass die Industrien für die Fabrikation von Gegenständen , z.B. Brillen , Zubehör wie
Kämme , Schirmgriffe , Wohnungszubehör im allgemeinen ,
usw. bei der Herstellung der letzteren vorwiegend Werkstoffe aus Azetylzellulose , Kunstharz , Pflanzenfasern
u.dgl. verwenden .

Während der Verarbeitung werden diese Materialien
Kalt- u. Warmpressverfahren , Verdrehverfahren , Spannverfahren , Leimverfahren und Einlegeverfahren unterzogen , welche eine hohe Homogeneität und Reinheit bei den
kompositorischen Merkmalen der Struktur des Materials
nach sich ziehen . Im gegenteiligen Fall , u.zw. bei
Vorhandensein von nicht gleichartigen Werkstoffen oder
Fremdkörper oder Luftblasen oder andere Körper aufweisenden Werkstoffen , welche gegenüber den Standardkoeffizienten unterschiedliche Elastizitätskoeffizienten
haben , können Produktionsunterbrechungen oder vom Profil der Qualität und/oder des Benutzungswiderstandes
im Fertigerzeugnis unannehmbare Ergebnisse ausgelöst
werden .

Was die Industrie der Brillenherstellung betrifft ,
ist aufgrund der Verwendung von Warmpressen und Warmausrüstungen , wie Nasenbieger u.dgl. , ausser den auf der
Verwendung von Azeton beruhenden Leimarbeitsstufen , die
Qualität der angewandten Materialien bei der Herstellung
von erheblicher Bedeutung , insofern die etwaige Anwesenheit von Luftblasen z.B. auf zum Anbau durch Leimung der
Brillenbügel bestimmten Oberflächen sehr wahrscheinlich
den Bruch der Bügel selbst verursachen würde . Weiters
kann die Gegenwart von Luftblasen auf einem Zug oder
einem Druck ausgesetzten Teilen die Widerstandshöhe des
Erzeugnisses bemerkenswert beeinträchtigen .

Um diesen Übelständen zuvorzukommen , welche trotz
der von den die Rohmaterialien in Form von Platten oder
Tafeln herstellenden Industrien auf letzteren vorgenommenen sorgfältigen Widerstandskontrollen immer wieder eintreten , hält man es für zweckmässig ein Gerät zur Qualitätskontrolle der Azetylzellulose-Materialien u.dgl.
sowie der durch die Verarbeitung solcher Materialien erhaltenen Fertigerzeugnisse zu schaffen , um auf diese
Weise die eingangs beschriebenen Übelstande zu vermeiden .

Das erfindungsgemässe Gerät zur Qualitätskontrolle
der Materialien besteht im wesentlichen aus einem zweckdienlich bemessenen und Öffnungen aufweisenden Behälter ,
in dem eine oder mehrere Lampen und ein Ventilator untergebracht sind , welcher letzterer in der Lage ist ,
die Temperatur auf gewünschten gleichmässigen Höhen zu
halten . Oberhalb dieses Behälters sind zwei vorzugsweise durch Glasplatten geschützte und untereinander
mittels einer zusammenschiebbaren Stange in gebührendem
Abstand aufgestellte polarisierte Platten vorgesehen ,
zwischen denen der zu analysierende Gegenstand gelegt
wird .

Das optische Prinzip , auf dem sich der Betrieb des
Gerätes der vorliegenden Erfindung stützt , besteht darin , dass die sich geradlinig ausbreitenden Lichtstrahlen , wenn sie eine im **allgemeinen** aus Chininjodsulfat-
Kristallen bestehende polarisierte Platte durchqueren ,
eine Richtungsänderung erfahren , indem sie sich in verschiedenen Trajektorien zerstreuen . Diese Erscheinung
gestattet es , die kompositorischen inneren Merkmale des
analysierten Materials zur Schau zu stellen , wobei folglich die Kontrolle des Materials ermöglicht wird .

Was bisher nur kurzgefasst angedeutet wurde , kann
der nachstehenden Beschreibung anhand der anliegenden
Zeichnung besser entnommen werden . In der Zeichnung
selbst zeigen :

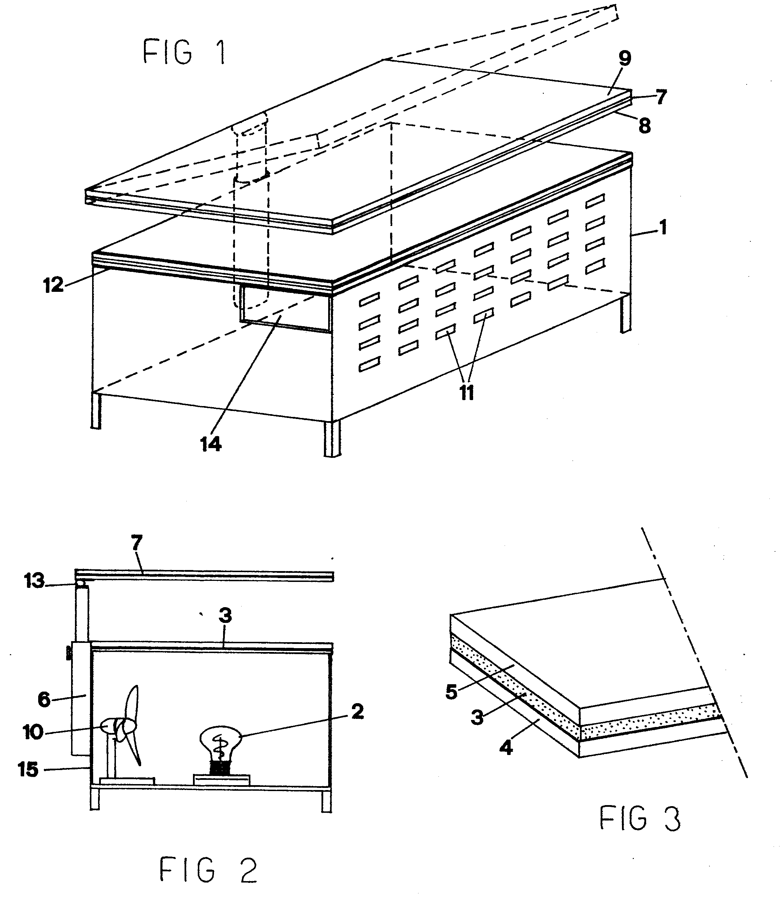

Fig. 1 eine axonometrische Ansicht des erfindungsgemässen Gerätes ,

Fig. 2 eine Seitenansicht dazu , und

0092016

Fig. 3 als Einzelheit einen Teil der polarisierten Platte .

Bezugnehmend auf diese Figuren besteht das erfindungsgemässe Gerät zur Qualitätskontrolle von Materialien aus einem Behälter 1 von zweckdienlichen Abmessungen , welcher längs seiner Seitenflächen mit Öffnungen 11 versehen ist , in dem eine oder mehrere Lampen 2 untergebracht sind . Die obere Seite des Behälter 1 besteht aus einer zwischen zwei Glasplatten 4 und 5 geschützten polarisierten Platte 3 , welche Stabilitäts- und Halterungsfunktionen haben und mit einem eigens dazu bestimmten , am Behälter 1 angelenkten , mit der Bezugnummer 12 angegebenen vorzugsweise metallischen Rahmen versehen sind . An der rückwärtigen Seite 15 des Behälters 1 ist eine zusammenschiebbare Stange 6 befestigt , an deren oberen Ende bei 13 eine **zweite** polarisierte Platte 7 angelenkt ist , welche wie die genannte Platte 3 zwischen zwei Glasflächen 8 und 9 eingeschoben ist . Die Teleskopstange 6 gestattet eine veränderliche Abstandhaltung zwischen den polarisierenden Platten 3 und 7 , zwischen denen die zu analysierenden Gegenstände eingelegt werden .

An einer Seite des Behälters 1 ist eine Steuerschalttafel 14 zur Betätigung der Lampen 2 und zur Regelung ihrer Lichtstärke vorgesehen . Die Steuerschalttafel betätigt auch einen Elektroventilator 10 , welcher mittels Regelung seines Luftflusses es gestattet , im Inneren des Behälters 1 die Temperatur auf einer gewünschten gleichmässigen Höhe zu halten .

Die Betriebsweise des Gerätes ist äusserst einfach ,
insofern es genügt die zu analysierenden Gegenstände auf
die polarisierende Platte 3 aufzulegen und die Lampen 2
und den Elekroventilator 10 einzuschalten , um daraufhin
die Gegenstände selbst auf der polarisierenden Platte 7 zu
beobachten . Während der Untersuchung durchquert das von
den Lampen 2 herrührende Licht die polarisierte Platte 3
und stellt im Falle einer Anwesenheit von Luftblasen am
analysierten Gegenstand unterschiedliche Färbungen um
eine Achse herum in den Vordergrund , indem somit die Anwesenheit von gefährlichen Spannungen herausgefunden ist .
Sind hingegen am untersuchten Gegenstand Fremdkörper zugegen , so werden diese durch Flecken veränderlicher Färbungen zur Schau gebracht , welche verschieden sind von
der Färbung der Masse .

Eine weitere vom beschriebenen Gerät gebotene Untersuchungsmöglichkeit hängt davon ab , dass die Analyse selbst
dynamisch vorgenommen werden kann , indem die Brillen oder
jeglicher anderer  Gegenstand in Prüfung Spannanstrengungen , Drehanstrengungen u.dgl. unterzogen werden , derart
um so die Gebrauchsbedingungen leicht vortäuschen zu können und durch das Spektrum der gefundenen Färbungen das Anstrengungsniveau aufnehmen zu können , dem der Gegenstand selbst ausgesetzt ist , wobei der Grenzpunkt für eine solche Anstrengung festgelegt wird .

Aus der bisherigen Beschreibung und Erläuterung ist ersichtlich , wie es das erfindungsgemässe Gerät gestattet gegen die eingangs erwähnten Mängel Abhilfe zu schaffen , indem die Möglichkeit geboten ist , den Fertigungsplan mit folglichen qualitativen und wirtschaftlichen Vorteilen in Hinsicht auf Bestleistungen zu verbessern .

Am bisher beschriebenen und erläuterten Gerät zur Qualitätskontrolle von Materialien könnten noch alle jene Verbesserungen , bzw. Abänderungen vorgenommen werden , welche bei der praktischen Anwendung , bzw. bei der Herstellung desselben vom Fachmann als nützlich angesehen werden , ohne damit vom eigentlichen Erfindungsgedanken abzuweichen , welcher in den nachstehenden Patentansprüchen nochmals zu erkennen ist .

"Gerät zur Qualitätskontrolle von Azetylzellulose-
Materialien u.dgl."

Patentansprüche :

1.)Gerät zur Qualitätskontrolle von Azetylzellulose-
Materialien u.dgl. ,

dadurch gekennzeichnet , dass es aus einem Behälter (1)
geeigneter Formgebung und Abmessungen besteht , in welchem eine oder mehrere Lampen (2) angemässener Leistung
sowie ein Elektroventilator (10) angeordnet sind , welcher letzterer in der Lage ist , die Temperatur im Inneren des Behälters (1) selbst auf annehmbaren gleichmässigen Höhen zu halten . ·

2.)Gerät , nach Anspruch 1 ,

dadurch gekennzeichnet , dass am oberen Teil des Behälters (1) eine polarisierte Platte (3) vorgesehen ist ,
welche von zwei Glasplatten gehalten und geschützt ist ,
wo die zu analysierenden Gegenstände aufgelegt werden .

3.)Gerät , nach den vorstehenden Ansprüchen ,

dadurch gekennzeichnet , dass an der Rückseite (15) des
Behälters (1) eine Teleskopstange (6) vorgesehen ist ,
an deren oberen Ende eine weitere , mit der Platte (3)
gemäss Anspruch 2 gleichartige polarisierte Platte (7)
angelenkt ist , durch welche die zu analylisierenden Gegenstände beobachtet werden , wobei die Teleskopstange (6) die Möglichkeit gibt , die Abstandhaltung zwischen der ersten Platte (3) und der zweiten Platte (7) verändern zu können .

4.)Gerät , nach den vorstehenden Ansprüchen , dadurch gekennzeichnet , dass das von den Lampen (2) gemäss Anspruch 1 herrührende Licht die polarisierte Platte (3) gemäss Anspruch 2 durchquert , indem die etwaigen Fehler des zu untersuchenden Materials mit unterschiedlichen Färbungen in den Vordergrund gestellt werden , wobei diese Analyse sowohl statisch als auch dynamisch stattfindet .

5.)Gerät zur Qualitätskontrolle von Azetylzellulose-Materialien u.dgl. , nach einem oder mehreren der vorstehenden Ansprüche , im wesentlichen wie beschrieben und erläutert .

FIG 1

9
7
8
1
12
11
14

FIG 2

7
13
3
6
10
15
2

FIG 3

5
3
4

Europäisches
Patentamt

**EUROPÄISCHER RECHERCHENBERICHT**

0092016

Nummer der Anmeldung

EP 82 83 0098

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 01 N 21/88 |
| A | MECHANICAL ENGINEERING, Band 93, Nr. 2, Februar 1971, Seite 50 "NASA tech briefs - Visual detection of holes in thin polymeric films" * Insgesamt * | 1,2 | G 01 N 21/23 |
| | --- | | |
| A | FR-A-2 439 993 (B. VEZIER) * Insgesamt * | 2,3 | |
| | --- | | |
| A | DE-A-2 043 876 (LICENTIA P.V.) * Seiten 2,3; Figur 1 * | 1,2 | |
| | --- | | |
| A | US-A-1 996 446 (E. WALTERS) * Seiten 2,3; Figuren 1,7 * | 1,2 | |
| | --- | | |
| A | US-A-3 621 231 (D. CRAIG) * Spalten 1,2; Figuren 1-4 * | 1,2 | RECHERCHIERTE SACHGEBIETE (Int. Cl. ³) |
| | --- | | |
| A | US-A-2 553 961 (J. DREYER) * Spalte 5, Figur 1 * | 2 | G 01 N 21/88<br>G 01 N 21/89<br>G 01 N 21/23 |
| | --- | | G 01 N 21/21 |
| A | FR-A-2 250 442 (G. RITZERFELD) * Seiten 2,3; Figur 1 * | 1 | G 01 N 21/29<br>G 02 B 27/02<br>G 02 B 27/28 |
| | ----- | | |

Der vorliegende Recherchenbericht wurde für alle Patentansprüche erstellt.

| Recherchenort DEN HAAG | Abschlußdatum der Recherche 12-01-1983 | Prüfer BOEHM CH.E.D. |
|---|---|---|